# EUROPEAN PATENT APPLICATION

(11) **EP 4 130 753 A1**
(43) Date of publication of application: **08.02.2023**
(21) Application number: 21776833.2
(22) Date of filing: 17.03.2021
(51) Int. Cl.: G01N 35/08, B01J 19/00, G01N 1/04

(54) **FLOW PATH DEVICE**

(30) Priority: 24.03.2020 JP 2020052386
(71) Applicant: Kyocera Corporation, Kyoto-shi Kyoto 612-8501 (JP)
(72) Inventor: UEHARA, Masami, Kyoto-shi, Kyoto 612-8501 (JP)
(74) Representative: Viering, Jentschura & Partner mbB Patent- und Rechtsanwälte
(86) International application number: PCT/JP2021/010800
(87) International publication number: WO 2021/193281

(57) **Abstract**

A first groove is connected to and continuous with a first hole. A second groove is connected to and continuous with the first groove. A third groove is connected to and continuous with the second groove. The third groove is connected to the second groove at a position on the second groove spaced from the first groove. The first groove extends toward a position opposite to the second groove with respect to the first hole. The second groove and the third groove define a first minor angle adjacent to the first hole and define a second minor angle opposite to the first hole. The first minor angle is larger than the second minor angle.

## Description

### TECHNICAL FIELD

The present disclosure relates to a flow path device.

### BACKGROUND OF INVENTION

Techniques have been developed for separating a specific type of particles (hereafter, separating target particles) from other types of particles in a fluid containing multiple types of particles and for performing a predetermined process on separating target particles (e.g., WO 2019/151150).

### SUMMARY

A flow path device includes a first surface including a first hole open in a first direction, a second surface opposite to the first surface in the first direction, a first groove connected to and continuous with the first hole without being open in the first surface or the second surface, a second groove connected to and continuous with the first groove without being open in the first surface or the second surface, and a third groove connected to and continuous with the second groove without being open in the first surface or the second surface. The third groove is connected to the second groove at a position on the second groove spaced from the first groove. The first groove extends toward a position opposite to the second groove with respect to the first hole.

As viewed in a direction parallel to the first direction, the second groove and the third groove define a first minor angle adjacent to the first hole and define a second minor angle opposite to the first hole. The first minor angle is larger than the second minor angle.

### BRIEF DESCRIPTION OF THE DRAWINGS

FIG. 1 is a schematic plan view of a flow path device according to an embodiment as viewed vertically downward (in the -Z direction).
FIG. 2 is a schematic plan view of a processing device as viewed vertically downward (in the -Z direction).
FIG. 3A is a schematic and partially cut imaginary sectional view of the flow path device at position A-A as viewed in the Y direction, FIG. 3B is a schematic and partially cut imaginary sectional view of the flow path device at position B-B as viewed in the Y direction, and FIG. 3C is a schematic and partially cut imaginary sectional view of the flow path device at position E-E as viewed in the Y direction.
FIG. 4 is a schematic plan view of a connection device as viewed vertically downward.
FIG. 5A is a schematic and partially cut imaginary sectional view of the flow path device at position C-C as viewed in a direction orthogonal to the Z direction, FIG. 5B is a schematic and partially cut imaginary sectional view of the flow path device at position D-D as viewed in the -X direction, and FIG. 5C is a schematic and partially cut imaginary sectional view of the flow path device at position F-F as viewed in the -X direction.
FIG. 6 is a schematic plan view of a separating device as viewed vertically downward (in the -Z direction).
FIG. 7 is a plan view illustrating an area M in FIG. 6.
FIG. 8 is a flowchart illustrating counting separating target particles.
FIG. 9 is a schematic partial plan view of the processing device immediately after the processing in step S2 in the flowchart of FIG. 8 is complete.
FIG. 10 is a schematic partial plan view of the processing device immediately after the processing in step S4 in the flowchart of FIG. 8 is complete.
FIG. 11 is a schematic partial plan view of the processing device immediately after the processing in step S5 in the flowchart of FIG. 8 is complete.
FIG. 12 is a schematic partial plan view of the processing device immediately after the processing in step S6 in the flowchart of FIG. 8 is complete.
FIG. 13 is a schematic partial plan view of the processing device immediately after the processing in step S7 in the flowchart of FIG. 8 is complete.
FIG. 14 is a plan view illustrating an area G1 in FIG. 13.
FIG. 15 is a schematic partial plan view of the processing device immediately after the processing in step S2 in the flowchart of FIG. 8 is complete.
FIG. 16 is a schematic partial plan view of the processing device immediately after the processing in step S4 in the flowchart of FIG. 8 is complete.
FIG. 17 is a schematic partial plan view of the processing device immediately after the processing in step S5 in the flowchart of FIG. 8 is complete.
FIG. 18 is a schematic partial plan view of the processing device immediately after the processing in step S6 in the flowchart of FIG. 8 is complete.
FIG. 19 is a schematic partial plan view of the processing device immediately after the processing in step S7 in the flowchart of FIG. 8 is complete.
FIG. 20A is a plan view illustrating an area G2 in FIG. 19, and FIG. 20B is a partial plan view of a processing device in a variation.

### DESCRIPTION OF EMBODIMENTS

Various embodiments and variations are described below with reference to the drawings. Throughout the drawings, components with the same or similar structures and functions are given the same reference numerals and will not be described repeatedly. The drawings are schematic.

The drawings may include the right-handed XYZ coordinate system for convenience. The Z direction herein is defined as the vertically upward direction. A first direction may be the vertically downward direction. The vertically downward direction is also referred to as the -Z direction. A second direction may be the X direction. The direction opposite to the X direction is also referred to as the -X direction. A third direction may be the Y direction. The direction opposite to the Y direction is also referred to as the -Y direction.

The flow path herein has a structure that allows a fluid to flow. The dimension of the flow path in the direction orthogonal to the direction in which the flow path extends is referred to as the width of the flow path.

### 1. Example Structure

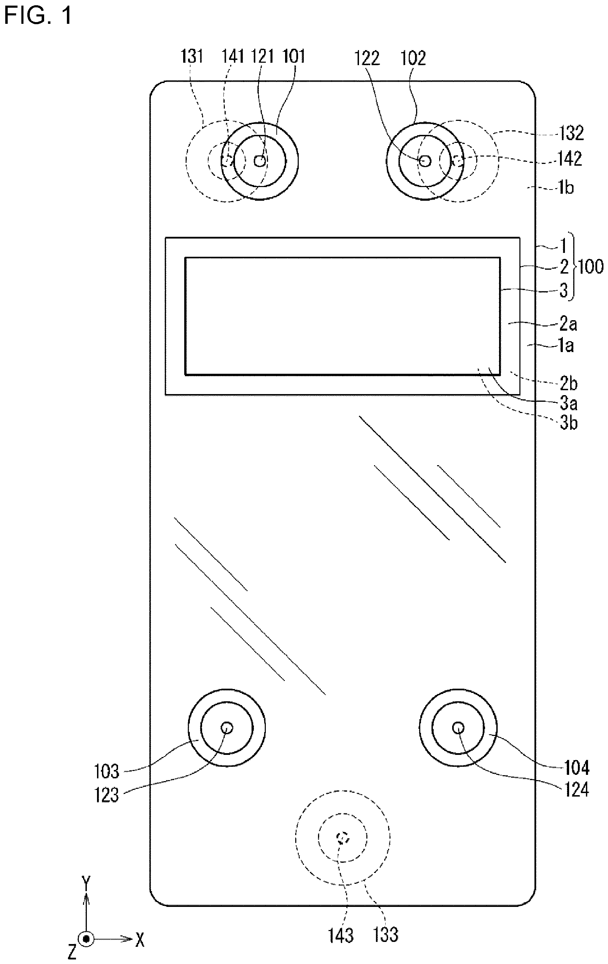

FIG. 1 is a plan view of a flow path device 100 according to an embodiment. The flow path device 100 includes a processing device 1, a connection device 2, and a separating device 3. The processing device 1, the connection device 2, and the separating device 3 are stacked in this order in the Z direction.

The processing device 1 includes surfaces 1a and 1b. The surface 1a is located in the Z direction from the surface 1b. The connection device 2 includes surfaces 2a and 2b. The surface 2a is located in the Z direction from the surface 2b. The surface 2b is in contact with the surface 1a. The surface 2b is bonded to the surface 1a with, for example, plasma or light.

The separating device 3 includes surfaces 3a and 3b. The surface 3a is located in the Z direction from the surface 3b. The surface 3b is in contact with the surface 2a. The surface 3b is bonded to the surface 2a with, for example, plasma or light.

For bonding with plasma, for example, oxygen plasma is used. For bonding with light, for example, ultraviolet light from an excimer lamp is used.

Each of the processing device 1, the connection device 2, and the separating device 3 is a rectangular plate as viewed in plan (hereafter, as viewed in the -Z direction unless otherwise specified). The surfaces 1a, 1b, 2a, 2b, 3a, and 3b are orthogonal to the Z direction.

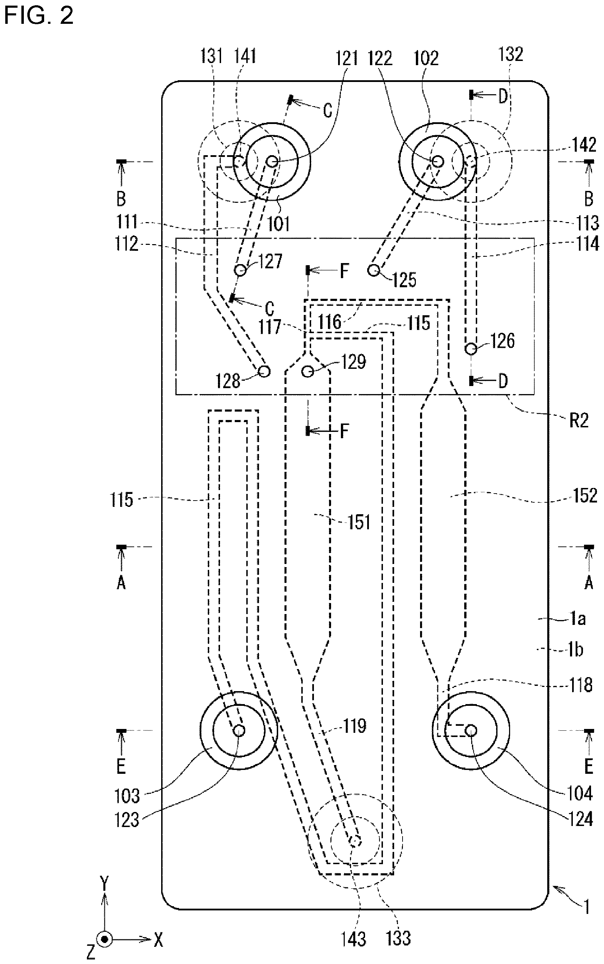

FIG. 2 is a plan view of the processing device 1. The dot-dash line indicates an area R2 at which the surface 2b of the connection device 2 is to be bonded. The processing device 1 has a thickness (a dimension in the Z direction) of, for example, about 0.5 to 5 mm (millimeters). The surfaces 1a and 1b each have a width (a dimension in the X direction) of, for example, about 10 to 30 mm. The surfaces 1a and 1b each have a length (a dimension in the Y direction) of, for example, about 20 to 50 mm.

The processing device 1 includes entry holes 121, 122, 124, 126, 128, and 129, exit holes 125 and 127, and a mixing-fluid hole 123. The entry holes 126, 128, and 129 and the exit holes 125 and 127 are open in the surface 1a in the area R2. The entry holes 121, 122, and 124 and the mixing-fluid hole 123 are open in the surface 1a outside the area R2. The entry holes 121, 122, 124, 126, 128, and 129, the exit holes 125 and 127, and the mixing-fluid hole 123 are not open in the surface 1b.

The processing device 1 includes exit holes 141, 142, and 143. The exit holes 141, 142, and 143 are open in the surface 1b outside the area R2 as viewed in plan. The exit holes 141, 142, and 143 are not open in the surface 1a.

The processing device 1 includes a mixing flow path 115, flow paths 111, 112, 113, 114, 116, 117, 118, and 119, a measurement flow path 151, and a reference flow path 152. The mixing flow path 115, the flow paths 111, 112, 113, 114, 116, 117, 118, and 119, the measurement flow path 151, and the reference flow path 152 are grooves that are not open in the surface 1a or 1b.

Elements continuous with each other refer to the elements being connected to allow a fluid to flow through the elements. The flow path 111 is continuous with the entry hole 121 and the exit hole 127. The flow path 112 is continuous with the entry hole 128 and the exit hole 141. The flow path 113 is continuous with the entry hole 122 and the exit hole 125. The flow path 114 is continuous with the entry hole 126 and the exit hole 142.

The mixing flow path 115 is continuous with the mixing-fluid hole 123 and is between the mixing-fluid hole 123 and the flow path 117. The flow path 116 is between the flow path 117 and the reference flow path 152. The flow path 117 is continuous with the mixing flow path 115 and is between the measurement flow path 151 and the flow path 116. The flow path 118 is continuous with the entry hole 124 and is between the entry hole 124 and the reference flow path 152. The flow path 119 is continuous with the exit hole 143 and is between the exit hole 143 and the measurement flow path 151.

The measurement flow path 151 is between the flow path 117 and the flow path 119. The measurement flow path 151 extends in the Y direction. The measurement flow path 151 has the end in the Y direction continuous with the flow path 117 and the opposite end continuous with the flow path 119. The measurement flow path 151 includes a portion continuous with the flow path 117 in the area R2 as viewed in plan. The measurement flow path 151 is continuous with the entry hole 129.

The reference flow path 152 is between the flow path 116 and the flow path 118. The reference flow path 152 extends in the Y direction. The reference flow path 152 has the end in the Y direction continuous with the flow path 116 and the opposite end continuous with the flow path 118. In the present embodiment, the measurement flow path 151 and the reference flow path 152 both extend in the Y direction. However, the measurement flow path 151 and the reference flow path 152 may extend in different directions.

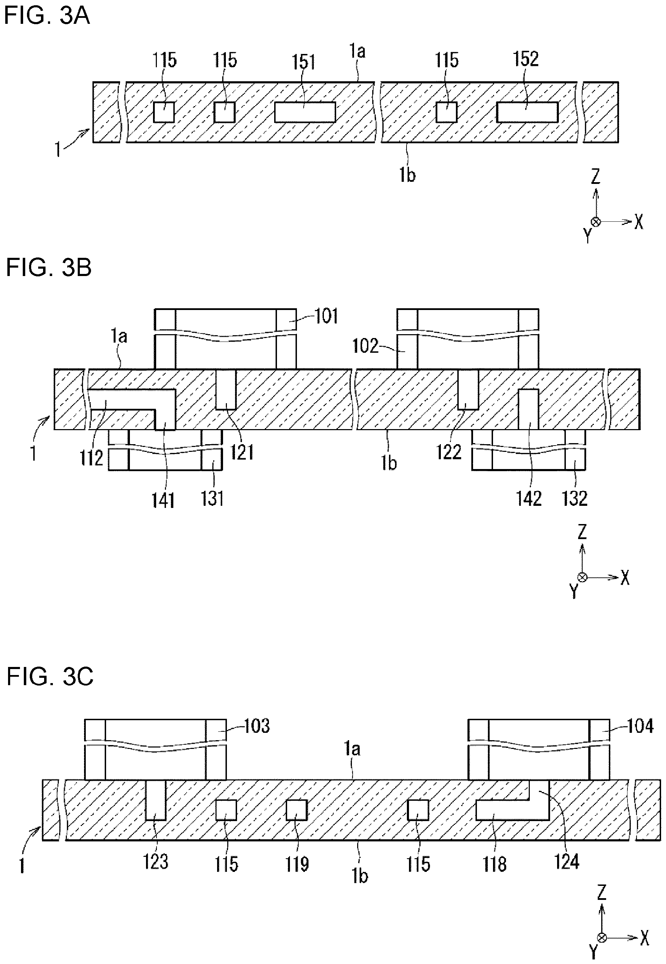

FIG. 3A is an imaginary sectional view of the flow path device 100. The mixing flow path 115 extends from the mixing-fluid hole 123 substantially in the Y direction, substantially in the -Y direction, substantially in the Y direction, and then in the -X direction, and is continuous with the flow path 117.

FIGs. 3B and 3C are imaginary sectional views of the flow path device 100. The processing device 1 includes cylinders 101, 102, 103, and 104 protruding from the surface 1a in the Z direction. The cylinder 101 surrounds the entry hole 121 about Z-axis. The cylinder 102 surrounds the entry hole 122 about Z-axis. The cylinder 103 surrounds the mixing-fluid hole 123 about Z-axis. The cylinder 104 surrounds the entry hole 124 about Z-axis.

The processing device 1 includes cylinders 131, 132, and 133 protruding from the surface 1b in the direction opposite to the Z direction. The cylinder 131 surrounds the exit hole 141 about Z-axis. The cylinder 132 surrounds the exit hole 142 about Z-axis. The cylinder 133 surrounds the exit hole 143 about Z-axis.

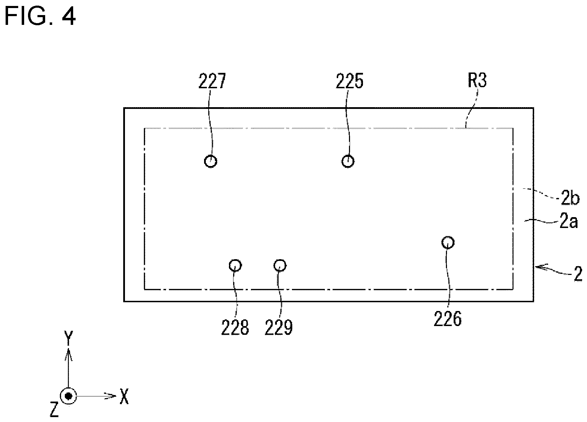

FIG. 4 is a plan view of the connection device 2. An area R3 is an area at which the surface 3b is to be bonded. The connection device 2 includes through-holes 225, 226, 227, 228, and 229. The through-holes 225, 226, 227, 228, and 229 extend through and between the surface 2a and the surface 2b in the area R3.

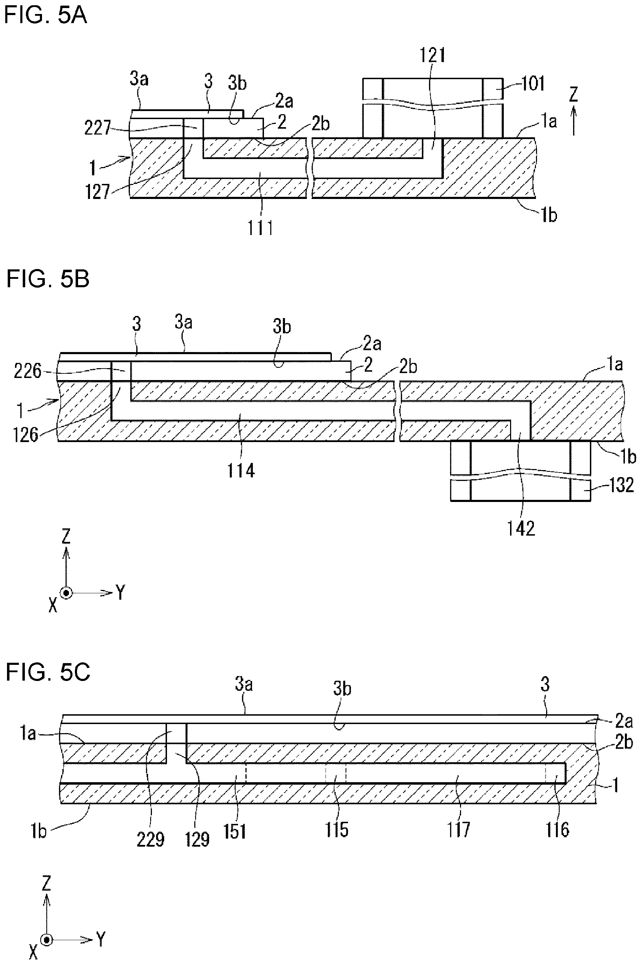

FIGs. 5A, 5B, and 5C are imaginary sectional views of the flow path device 100. The through-hole 225 is continuous with the exit hole 125. The through-hole 225 is continuous with the entry hole 122 through the exit hole 125 and the flow path 113 in this order. The through-hole 226 is continuous with the entry hole 126. The through-hole 226 is continuous with the exit hole 142 through the entry hole 126 and the flow path 114 in this order. The through-hole 227 is continuous with the exit hole 127. The through-hole 227 is continuous with the entry hole 121 through the exit hole 127 and the flow path 111 in this order. The through-hole 228 is continuous with the entry hole 128. The through-hole 228 is continuous with the exit hole 141 through the entry hole 128 and the flow path 112 in this order. The through-hole 229 is continuous with the entry hole 129. The through-hole 229 is continuous with the measurement flow path 151 through the entry hole 129.

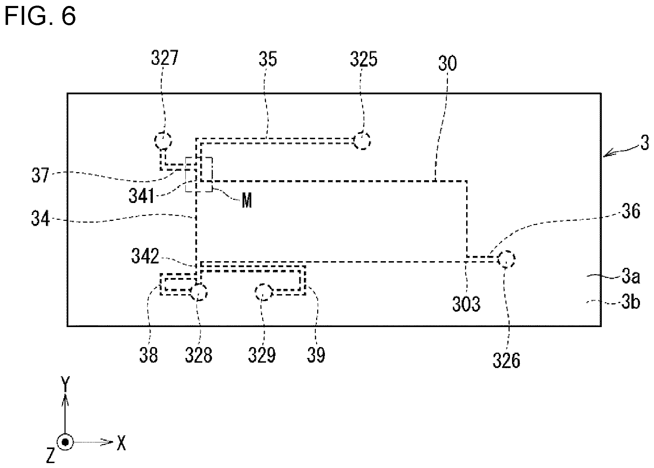

FIG. 6 is a plan view of the separating device 3. The separating device 3 has a thickness (a dimension in the Z direction) of, for example, about 1 to 5 mm. The surfaces 3a and 3b each have a width (a dimension in the X direction) of, for example, about 10 to 50 mm. The surfaces 3a and 3b each have a length (a dimension in the Y direction) of, for example, about 10 to 30 mm.

The separating device 3 includes entry holes 325 and 327, exit holes 326, 328, and 329, a separating flow path 30, and flow paths 35, 37, 38, and 39. The entry holes 325 and 327 and the exit holes 326, 328, and 329 are open in the surface 3b without being open in the surface 3a. The separating flow path 30 and the flow paths 35, 37, 38, and 39 are grooves that are open in the surface 3b without being open in the surface 3a.

The surface 3b is in contact with the surface 2a excluding a portion with the entry holes 325 and 327, the exit holes 326, 328, and 329, the separating flow path 30, and the flow paths 35, 37, 38, and 39. A fluid does not enter between portions of the surface 3b and the surface 2a that are in contact with each other. The separating flow path 30 and the flow paths 35, 37, 38, and 39, together with the surface 2a, allow a fluid to move.

The separating flow path 30 includes a main flow path 34 and an output port 303. The main flow path 34 includes an input port 341 and an output port 342. The main flow path 34 extends in the -Y direction from the input port 341 to the output port 342.

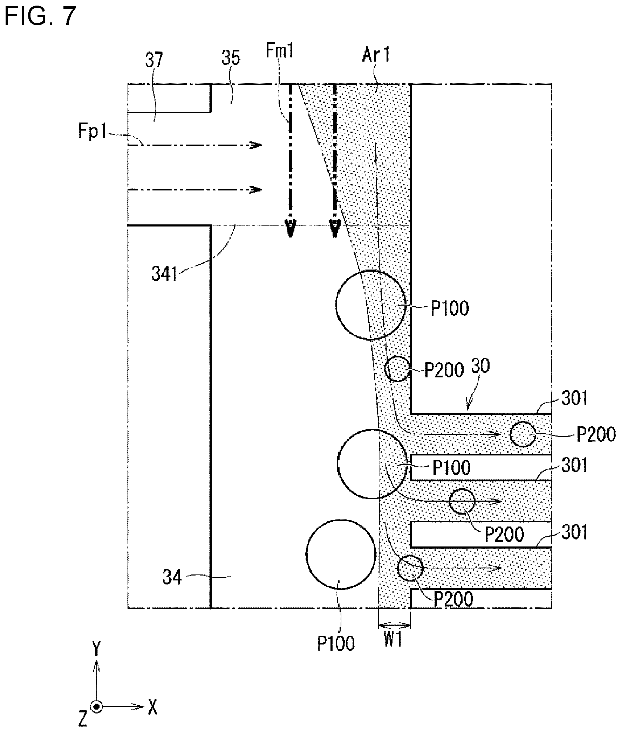

FIG. 7 partially illustrates the separating device 3. The separating flow path 30 and the flow paths 35 and 37 are illustrated with solid lines for convenience. The separating flow path 30 includes multiple branch flow paths 301. The branch flow paths 301 branch from the main flow path 34 at different positions in the Y direction. The branch flow paths 301 each extend in the X direction. The branch flow paths 301 are each continuous with the output port 303 opposite to the main flow path 34.

The entry hole 325 is continuous with the through-hole 225. The entry hole 325 is continuous with the entry hole 122 through the through-hole 225, the exit hole 125, and the flow path 113 in this order. The entry hole 327 is continuous with the through-hole 227. The entry hole 327 is continuous with the entry hole 121 through the through-hole 227, the exit hole 127, and the flow path 111 in this order. The exit hole 326 is continuous with the through-hole 226. The exit hole 326 is continuous with the exit hole 142 through the through-hole 226, the entry hole 126, and the flow path 114 in this order. The exit hole 328 is continuous with the through-hole 228. The exit hole 328 is continuous with the exit hole 141 through the through-hole 228, the entry hole 128, and the flow path 112 in this order. The exit hole 329 is continuous with the through-hole 229. The exit hole 329 is continuous with the measurement flow path 151 through the through-hole 229 and the entry hole 129.

The flow path 35 joins the entry hole 325 and the input port 341. The flow path 35 is continuous with the main flow path 34 at the input port 341. The flow path 35 extends in the -Y direction and is joined to the input port 341. The flow path 35 includes a portion extending in the Y direction near the input port 341.

The flow path 37 extends in the X direction and is joined to the portion of the flow path 35 extending in the Y direction near the input port 341. The entry hole 327 is continuous with the main flow path 34 through the flow path 37.

The flow path 36 joins the exit hole 326 and the output port 303. The flow path 36 extends in the X direction.

The flow path 38 joins the exit hole 328 and the output port 342. The flow path 38 extends in the Y direction and is joined to the output port 342. The flow path 38 extends from the output port 342 in the -Y direction, in the -X direction, in the -Y direction, and then in the X direction to the exit hole 328.

The flow path 39 extends in the -X direction and is joined to a portion of the flow path 38 extending in the Y direction near the output port 342. The exit hole 329 is continuous with the output port 342 through the flow path 39. The flow path 39 extends from the flow path 38 in the X direction, in the -Y direction, and then in the -X direction to the exit hole 329.

### 2. Example Functions

The flow path device 100 has functions generally described below.

A fluid containing multiple types of particles P100 and P200 (hereafter also a processing target fluid; refer to FIG. 7) is introduced into the separating device 3. The separating device 3 separates separating target particles P100 as a specific type of particles from other types of particles (hereafter also non-target particles) P200 and discharges the separating target particles P100. The fluid may contain three or more types of particles. In the example described below, the separating target particles P100 are of a single type, and the non-target particles P200 are of another single type.

The processing device 1 is used to perform a process on the separating target particles P100. The process includes, for example, counting the separating target particles P100 (detection of the number). To describe the process, the separating target particles P100 and the fluid containing the separating target particles P100 are both herein also referred to as a sample.

The connection device 2 guides the separating target particles P100 (specifically, the sample) discharged from the separating device 3 to the processing device 1.

A pressing fluid is introduced into the flow path device 100 through the entry hole 121. A processing target fluid is introduced into the flow path device 100 through the entry hole 122. A mixing fluid is fed into the flow path device 100 through the mixing-fluid hole 123. The mixing fluid is discharged from the flow path device 100 through the mixing-fluid hole 123. A dispersing fluid is introduced into the flow path device 100 through the entry hole 124. Specific examples and the functions of the pressing fluid, the mixing fluid, and the dispersing fluid are described later.

A tube is externally connectable to the flow path device 100 to introduce the pressing fluid into the flow path device 100 through the entry hole 121 using the cylinder 101.

A tube is externally connectable to the flow path device 100 to introduce the processing target fluid into the flow path device 100 through the entry hole 122 using the cylinder 102.

A tube is externally connectable to the flow path device 100 to feed the mixing fluid into the flow path device 100 through the mixing-fluid hole 123 using the cylinder 103.

A tube is externally connectable to the flow path device 100 to introduce the dispersing fluid into the flow path device 100 through the entry hole 124 using the cylinder 104.

The processing target fluid introduced into the flow path device 100 through the entry hole 122 flows through the flow path 113, the exit hole 125, the through-hole 225, the entry hole 325, the flow path 35, and the input port 341 in this order, and then flows into the main flow path 34.

The pressing fluid introduced into the flow path device 100 through the entry hole 121 flows through the flow path 111, the exit hole 127, the through-hole 227, the entry hole 327, and the flow path 37 in this order, and then flows into the main flow path 34.

In FIG. 7, the arrows Fp1 drawn with two-dot chain lines indicate the direction of flow of the pressing fluid. The direction is the X direction. In FIG. 7, the arrows Fm1 drawn with two-dot chain lines thicker than the arrows Fp1 indicate the direction of the main flow of the processing target fluid (also referred to as a main flow) in the main flow path 34. The direction is the -Y direction.

FIG. 7 schematically illustrates the separating target particles P100 with a greater diameter than the non-target particles P200 being separated from the non-target particles P200. More specifically, in the illustrated example, the branch flow paths 301 each have a width (a dimension of the branch flow path 301 in the Y direction) greater than the diameter of the non-target particles P200 and less than the diameter of the separating target particles P100.

At least the main flow path 34 and the flow path 35 each have a width greater than the diameter of the separating target particles P100 and the diameter of the non-target particles P200. The width of the main flow path 34 refers to the dimension of the main flow path 34 in the X direction. The width of the flow path 35 refers to the dimension of the flow path 35 in the X direction for its portion near the main flow path 34. The width of the flow path 35 refers to the dimension of the flow path 35 in the Y direction for its portion extending in the -X direction.

The non-target particles P200 move along the main flow path 34 in the -Y direction and mostly flow into the branch flow paths 301. The non-target particles P200 mostly flow through the branch flow paths 301, the output port 303, the flow path 36, the exit hole 326, the through-hole 226, the entry hole 126, and the flow path 114, and are then discharged through the exit hole 142.

The branch flow paths 301 connected to the main flow path 34 each have the cross-sectional area and the length adjusted to cause the non-target particles P200 to flow from the main flow path 34 into the branch flow paths 301 and to be separated from the separating target particles P100. In the present embodiment, a process to be performed on the discharged non-target particles P200 is not specified.

The separating target particles P100 move along the main flow path 34 in the -Y direction substantially without flowing into the branch flow paths 301. The separating target particles P100 mostly flow through the main flow path 34, the output port 342, the flow path 39, the exit hole 329, the through-hole 229, and the entry hole 129 into the measurement flow path 151.

While the separating target particles P100 flow through the flow path 39, a component of the processing target fluid other than the separating target particles P100 flows through the flow path 38 and is discharged. An example of the component is described later. The flow path 39 has a width greater than the size of the separating target particles P100. The separating target particles P100 flow from the output port 342 into the flow path 39 rather than into the flow path 38, similarly to the non-target particles P200 flowing into the branch flow paths 301 from the main flow path 34.

The component flows into the flow path 38, further flows through the exit hole 328, the through-hole 228, the entry hole 128, and the flow path 112, and is then discharged through the exit hole 141. In the present embodiment, a process to be performed on the discharged component is not specified.

In the present embodiment, the processing target fluid is directed into the branch flow paths 301 using a flow (hereafter, a fluid-drawing flow). The fluid-drawing flow allows the separating target particles P100 to be separated from the non-target particles P200 using the main flow path 34 and the branch flow paths 301. The fluid-drawing flow is indicated by a hatched area Ar1 with a dot pattern in FIG. 7. The state of the fluid-drawing flow indicated by the area Ar1 in FIG. 7 is a mere example and may be changed in accordance with the relationship between the flow velocity and the flow rate of the introduced processing target fluid (main flow) and the flow velocity and the flow rate of the pressing fluid. The area Ar1 may be adjusted as appropriate to efficiently separate the separating target particles P100 from the non-target particles P200.

The pressing fluid directs the processing target fluid toward the branch flow paths 301 in the X direction from a position opposite to the branch flow paths 301. The pressing fluid can create the fluid-drawing flow.

In FIG. 7, the fluid-drawing flow in the main flow path 34 has a width W1 (a dimension of the fluid-drawing flow in the X direction) near a branch of the main flow path 34 to each branch flow path 301. The width W1 may be adjusted by, for example, the cross-sectional areas and the lengths of the main flow path 34 and the branch flow paths 301 and by the flow rates of the processing target fluid and the pressing fluid.

At the width W1 illustrated in FIG. 7, the area Ar1 of the fluid-drawing flow does not include the center of gravity of each separating target particle P100 and includes the center of gravity of each non-target particle P200.

The processing target fluid is, for example, blood. In this case, the separating target particles P100 are, for example, white blood cells. The non-target particles P200 are, for example, red blood cells. The process on the separating target particles P100 includes, for example, counting white blood cells. The component flowing through the flow path 38 and the exit hole 328 before being discharged from the separating device 3 is, for example, blood plasma. In this case, the pressing fluid is, for example, PBS (phosphate-buffered saline).

A red blood cell has the center of gravity at, for example, about 2 to 2.5 µm (micrometers) from its outer rim. A red blood cell has a maximum diameter of, for example, about 6 to 8 µm. A white blood cell has the center of gravity at, for example, about 5 to 10 µm from its outer rim. A white blood cell has a maximum diameter of, for example, about 10 to 30 µm. To effectively separate red blood cells and white blood cells in blood, the fluid-drawing flow has the width W1 of about 2 to 15 µm.

The main flow path 34 has an imaginary cross-sectional area of, for example, about 300 to 1000 µm² (square micrometers) along the XZ plane. The main flow path 34 has a length of, for example, about 0.5 to 20 mm in the Y direction. Each branch flow path 301 has an imaginary cross-sectional area of, for example, about 100 to 500 µm² along the YZ plane. Each branch flow path 301 has a length of, for example, about 3 to 25 mm in the X direction. The flow velocity in the main flow path 34 is, for example, about 0.2 to 5 m/s (meters per second). The flow rate in the main flow path 34 is, for example, about 0.1 to 5 µl/s (microliters per second).

The material for the separating device 3 is, for example, PDMS (polydimethylsiloxane). PDMS is highly transferable in resin molding using molds. A transferrable material can produce a resin-molded product including fine protrusions and recesses corresponding to a fine pattern on the mold. The separating device 3 is resin-molded using PDMS for easy manufacture of the flow path device 100. The material for the connection device 2 is, for example, a silicone resin.

The dispersing fluid introduced into the flow path device 100 through the entry hole 124 flows through the flow path 118, the reference flow path 152, and the flow paths 116 and 117 in this order, and then flows into the measurement flow path 151.

The dispersing fluid disperses the separating target particles P100 introduced into the measurement flow path 151 through the entry hole 129. Dispersing herein is an antonym of clumping or aggregation of the separating target particles P100. Dispersing the separating target particles P100 allows a predetermined process (e.g., counting in the present embodiment) to be performed easily or accurately or both. For the processing target fluid being blood, the dispersing fluid is, for example, PBS.

The mixing fluid introduced into the flow path device 100 through the mixing-fluid hole 123 flows into the mixing flow path 115. The mixing fluid flows back and forth through the mixing flow path 115 with an external operation. For example, the mixing fluid may be air. In this case, the air pressure at the mixing-fluid hole 123 is controlled to cause air to flow back and forth through the mixing flow path 115. For example, the mixing fluid may be PBS. In this case, PBS flows back and forth through the mixing flow path 115 as it flows into and out of the mixing-fluid hole 123.

The mixing fluid flowing back and forth through the mixing flow path 115 allows mixing of the dispersing fluid and the sample. The dispersing fluid being mixed with the sample can disperse the separating target particles P100.

The sample, the dispersing fluid, and optionally the mixing fluid, flow through the measurement flow path 151 toward the flow path 119. The measurement flow path 151 is used to perform a predetermined process on the separating target particles P100.

The sample, the dispersing fluid, and optionally the mixing fluid, flow through the flow path 119 and are discharged through the exit hole 143 after the predetermined process is performed on the separating target particles P100. In the present embodiment, a process to be performed on the discharged separating target particles P100 is not specified.

The material for the processing device 1 is, for example, a COP (cycloolefin polymer). The device made of a COP is less flexible.

With the separating flow path 30 and the flow paths 35, 37, 38, and 39, together with the surface 2a, allowing a fluid to move, the connection device 2 and the separating device 3 are less flexible. The separating device 3 made of PDMS and the connection device 2 made of a silicone resin are flexible. The processing device 1 made of a COP is less likely to deteriorate the function of the separating device 3.

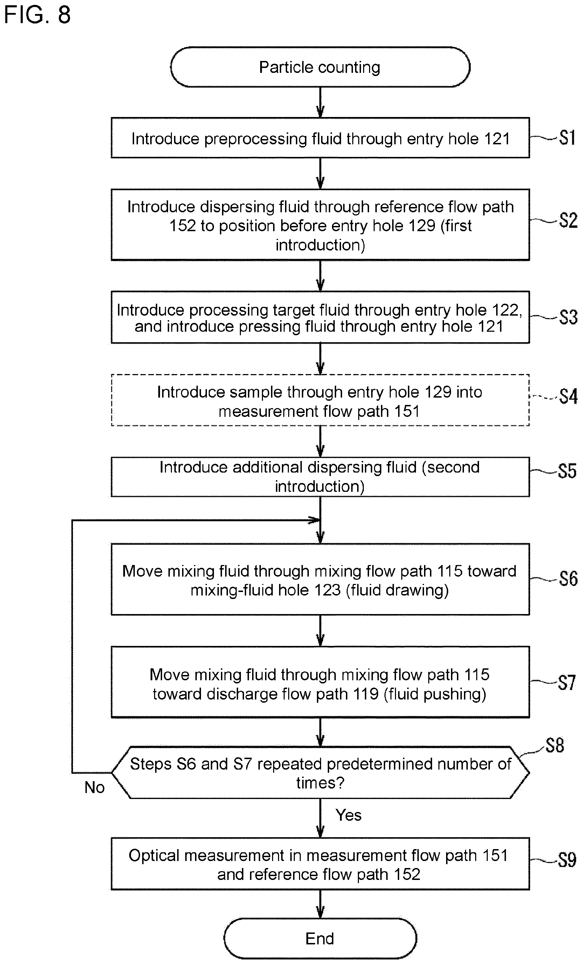

In the illustrated example, the predetermined process on the separating target particles P100 includes counting the separating target particles P100. In FIG. 8, counting the separating target particles P100 is abbreviated as particle counting.

In step S1, a fluid is introduced into the flow path device 100 through the entry hole 121 in a process before the processing target fluid is introduced into the flow path device 100. Such a fluid (hereafter, a preprocessing fluid) cleans the flow path device 100 and facilitates movement of the processing target fluid and the sample in the separating device 3. Step S 1 may be eliminated.

The preprocessing fluid is introduced through the entry hole 327. For example, the preprocessing fluid also serves as the pressing fluid and flows through the entry hole 121, the flow path 111, the exit hole 127, the through-hole 227, and the entry hole 327 in this order and reaches the flow path 37.

The preprocessing fluid flows from the flow path 37 through the flow path 35 to at least the entry hole 325, or further flows through the through-hole 225, the exit hole 125, and the flow path 113 in this order, and is then discharged through the entry hole 122. The preprocessing fluid flows through the flow path 35 and the entry hole 325 or further through the through-hole 225, the exit hole 125, the flow path 113, and the entry hole 122 in the direction opposite to the direction of the processing target fluid.

The preprocessing fluid flows from the flow path 37 through the main flow path 34 and the flow path 38 to at least the exit hole 328, or further flows through the through-hole 228, the entry hole 128, and the flow path 112 in this order, and is then discharged through the exit hole 141.

The preprocessing fluid flows from the flow path 37 through the main flow path 34, the branch flow paths 301, and the flow path 36 in this order to at least the exit hole 326, or further flows through the through-hole 226, the entry hole 126, and the flow path 114 in this order, and is then discharged through the exit hole 142.

The preprocessing fluid flows from the flow path 37 through the main flow path 34 and the flow path 39 to at least the exit hole 329, or further flows through the through-hole 229 and the entry hole 129 to the measurement flow path 151. The preprocessing fluid reaching the measurement flow path 151 further flows through the flow path 119 and is discharged through the exit hole 143.

After step S1 is performed, the dispersing fluid is introduced through the entry hole 124, the flow path 118, the reference flow path 152, and the flow path 116 in this order to a position before the entry hole 129 (step S2). The position before the entry hole 129 herein refers to a position on the measurement flow path 151 nearer the flow path 117 than the entry hole 129 or a position on the flow path 117 nearer the measurement flow path 151 than the mixing flow path 115.

The processing in step S2 is complete when the dispersing fluid flows to the position before the entry hole 129. Another dispersing fluid is introduced later, and thus the processing in step S2 is referred to as first introduction.

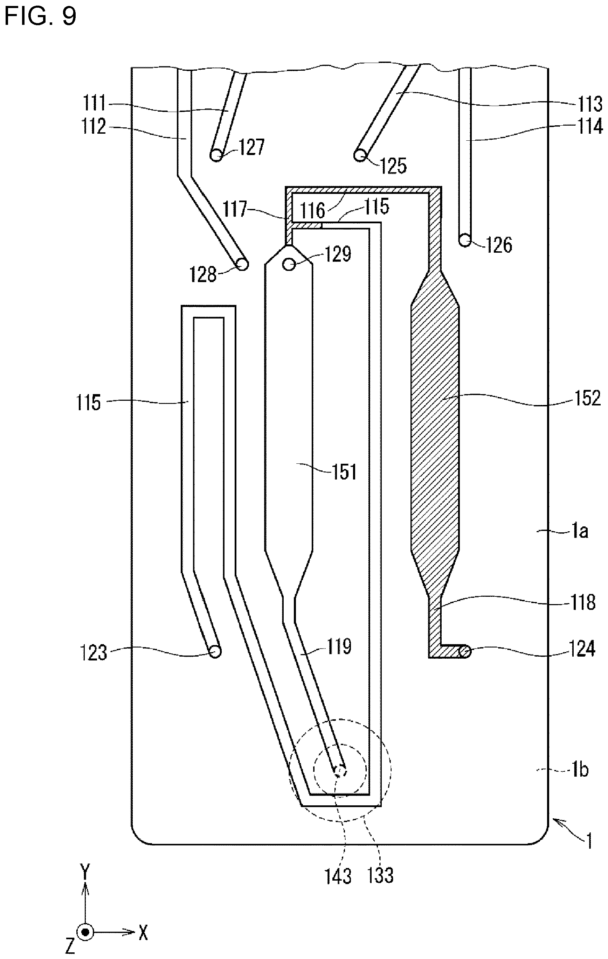

For simplicity, in FIG. 9 and subsequent figures, the elements located in the Z direction from the surface 1b are indicated by solid lines when the elements are actually hidden under the surface 1a. The sample described with reference to FIG. 9 and subsequent figures refers to a fluid containing the separating target particles P100.

In the example of FIG. 9, the dispersing fluid fills the entry hole 124, the flow path 118, the reference flow path 152, the flow path 116, and the flow path 117 and reaches the junction between the flow path 117 and the measurement flow path 151. Step S2 is performed to cause the dispersing fluid to flow also into the mixing flow path 115 through the flow path 117. In FIG. 9, the area with the dispersing fluid is hatched with diagonal lines from the lower left to the upper right.

In the processing in step S2, the dispersing fluid pushes any preprocessing fluid remaining in the entry hole 129 and the measurement flow path 151 before step S2. This causes the preprocessing fluid to be discharged from the measurement flow path 151 through the flow path 119 and the exit hole 143. The area with the preprocessing fluid is not illustrated in the figures.

Upon completion of the processing in step S2, the processing target fluid is introduced through the entry hole 122, and the pressing fluid is introduced through the entry hole 121 (step S3).

Step S3 is performed to prepare the sample as illustrated in FIG. 7. The sample flows through the flow path 39, the exit hole 329, the through-hole 229, and the entry hole 129 in this order and reaches the measurement flow path 151.

In step S4 in FIG. 8, the sample is introduced through the entry hole 129 into the measurement flow path 151. This process can accompany the processing in step S3. Step S4 is enclosed in a dashed block, indicating that the processing in step S4 accompanies the processing in step S3. Step S4 is complete upon completion of introduction of the sample through the entry hole 129.

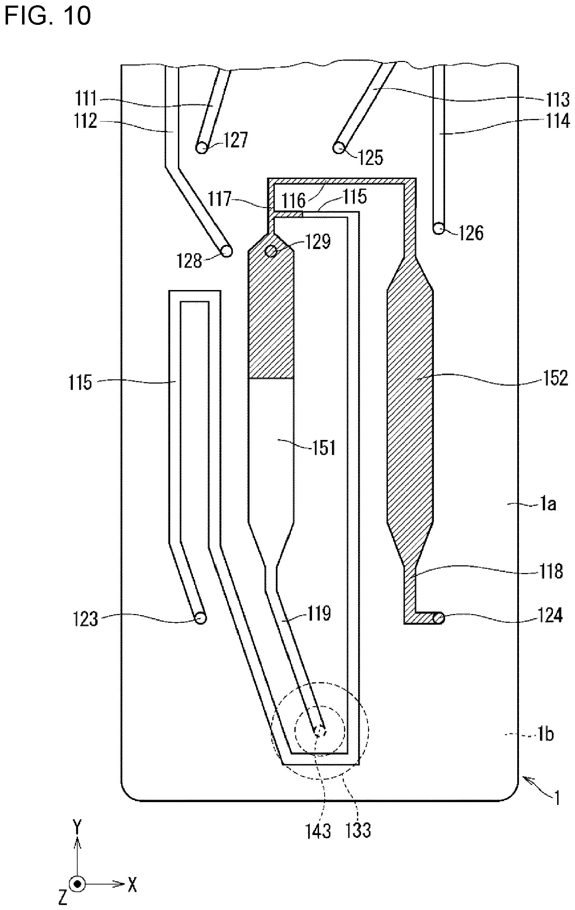

The processing in step S4 causes the fluid to flow into the measurement flow path 151. In FIG. 10, the area with the dispersing fluid and the sample is hatched with diagonal lines from the lower left to the upper right without distinguishing the dispersing fluid from the sample. In the subsequent figures, hatching is used in the same or similar manner unless otherwise specified. In the example of FIG. 10, the fluid in the measurement flow path 151 is mostly the sample introduced into the measurement flow path 151 in step S4.

The separating target particles P100 (not illustrated in FIG. 9 and subsequent figures) have not spread widely in the measurement flow path 151 immediately after the processing in step S4 is complete. The separating target particles P100 may aggregate in a portion of the measurement flow path 151 continuous with the entry hole 129 and may further aggregate in the entry hole 129.

Upon completion of the processing in step S4, an additional dispersing fluid is introduced in step S5. The introduction is referred to as second introduction. The dispersing fluid is introduced through the entry hole 124, the flow path 118, the reference flow path 152, and the flow path 116 in this order to the flow path 117. The dispersing fluid introduced in the first introduction is pushed into the measurement flow path 151 by the dispersing fluid introduced in the second introduction. Step S5 is complete upon completion of introduction of the dispersing fluid.

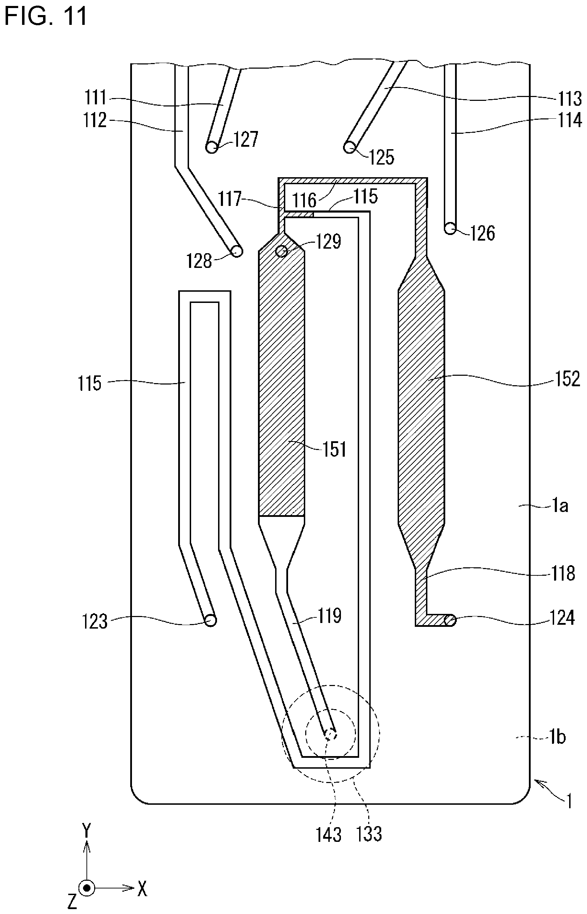

The second introduction causes the sample and the dispersing fluid to occupy a larger area in the measurement flow path 151 as illustrated in FIG. 11 as compared with FIG. 10.

The separating target particles P100 spread more widely in the measurement flow path 151 immediately after the processing in step S5 is complete than immediately after the processing in step S4 is complete. However, the separating target particles P100 may aggregate in a portion of the measurement flow path 151 continuous with the entry hole 129 and may further aggregate in the entry hole 129.

Steps S6 and S7 are repeatedly performed after the processing in step S5 is complete. For example, a set of steps S6 and S7 is repeated five to ten times.

In the processing in step S6, the mixing fluid moves through the mixing flow path 115 toward the mixing-fluid hole 123. For example, the mixing fluid may be air. In this case, the air pressure at the mixing-fluid hole 123 is controlled to evacuate the mixing flow path 115. The air pressure can be controlled using any of known pumps.

The mixing flow path 115 is evacuated to cause the sample and the dispersing fluid to be drawn from the measurement flow path 151 into the mixing flow path 115. The processing in step S6 is thus referred to as fluid drawing.

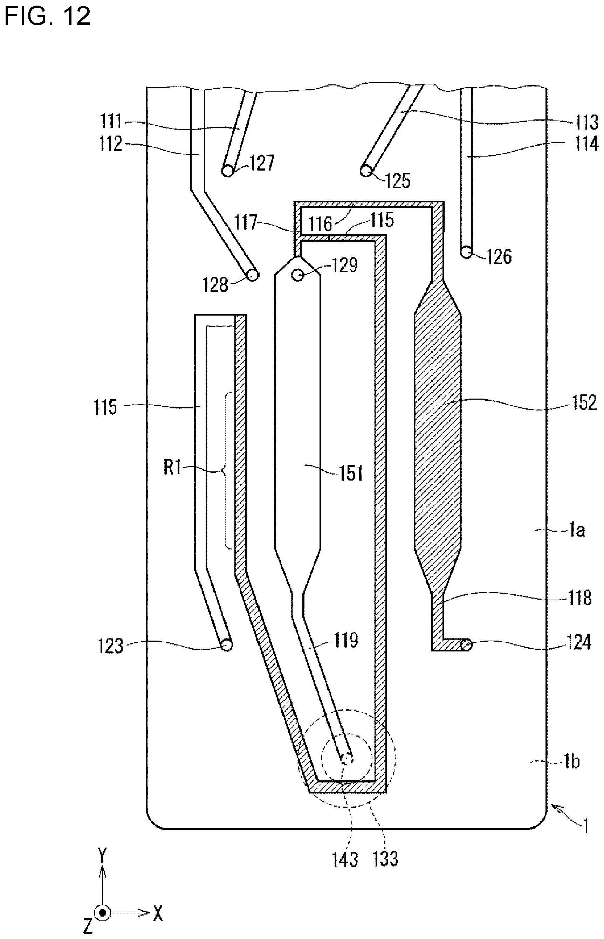

As illustrated in FIG. 12, the processing in step S6 is complete before the sample and the dispersing fluid reach the mixing-fluid hole 123. Step S6 is performed to cause substantially all the sample and the dispersing fluid to be drawn from the measurement flow path 151 into the mixing flow path 115. The fluid drawing causes the separating target particles P100 to move to an area R1. The area R1 is an area with the sample or the dispersing fluid and relatively near the mixing-fluid hole 123.

In the processing in step S7, the mixing fluid moves through the mixing flow path 115 toward the flow path 119 or toward the measurement flow path 151.

The mixing fluid moves through the mixing flow path 115 toward the flow path 119 and causes the sample and the dispersing fluid to be pushed and mostly move from the mixing flow path 115 into the measurement flow path 151 through the flow path 117. The processing in step S7 is thus referred to as fluid pushing. The sample and the dispersing fluid mostly move toward the flow path 119 through the measurement flow path 151. The measurement flow path 151 is used to perform a predetermined process on the separating target particles P100 (step S9 described later).

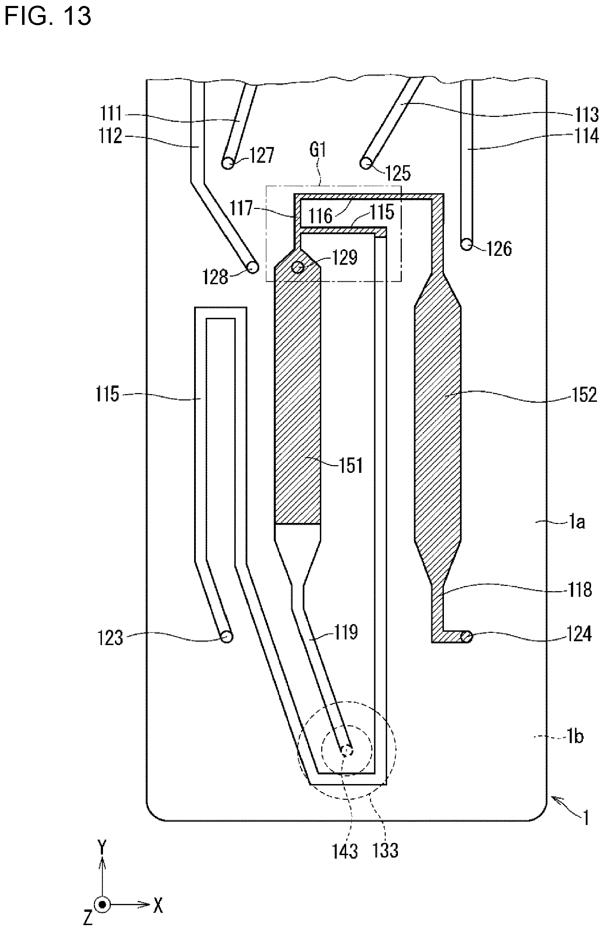

As illustrated in FIG. 13, the processing in step S7 is complete before the sample and the dispersing fluid reach the flow path 119. Step S7 is performed to cause substantially all the sample and the dispersing fluid to be pushed from the mixing flow path 115 into the measurement flow path 151.

Upon completion of the processing in step S7, the determination is performed as to whether steps S6 and S7 have been repeated a predetermined number of times in step S8. In response to a negative determination result (No in FIG. 8), the processing in steps S6 and S7 is performed again.

Steps S6 and S7 are repeatedly performed to cause the mixing fluid to move back and forth through the mixing flow path 115. The moving mixing fluid mixes the dispersing fluid and the sample. The mixed dispersing fluid can disperse the separating target particles P100. Dispersing the separating target particles P100 allows a predetermined process to be performed on the separating target particles P100 accurately or easily.

In response to an affirmative determination result in step S8 (Yes in FIG. 8), the processing in step S9 is performed. Step S9 corresponds to the above predetermined process. The predetermined process herein includes, for example, optical measurement of the separating target particles P100. For example, the optical measurement is performed using both the measurement flow path 151 and the reference flow path 152.

For example, the separating target particles P100 in the measurement flow path 151 can be counted with known optical measurement. At least the measurement flow path 151 in the processing device 1 may be light-transmissive for efficient counting of the separating target particles P100.

For example, the separating target particles P100 are counted by using illumination of the surface 1b with light that is transmitted through the processing device 1 to the surface 1a and measuring the transmitted light at the measurement flow path 151. The processing device 1 made of a COP can be light-transmissive. In FIGs. 1, 3A, 3B, 3C, 5A, 5B, and 5C, the processing device 1 is hatched to indicate its light transmissiveness.

The same or similar optical measurement is performed on, for example, the reference flow path 152. The measurement result may be used as a reference value for counting at the measurement flow path 151. The reference value can reduce counting error.

### 3. Improvement with Fluid Drawing

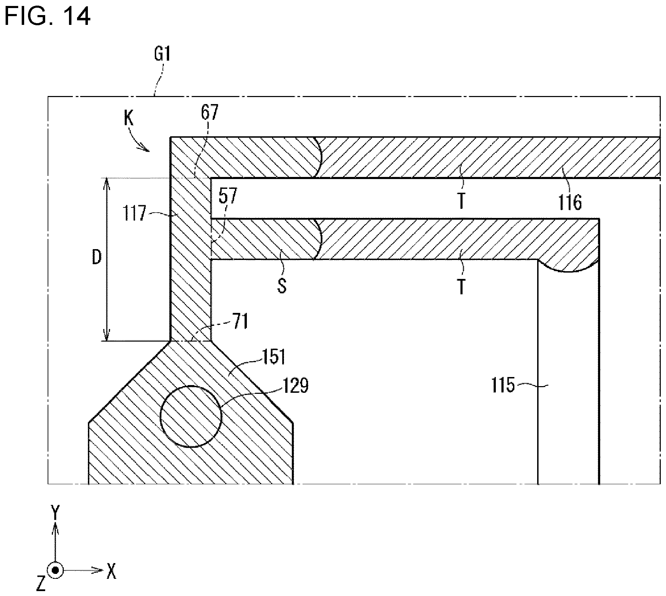

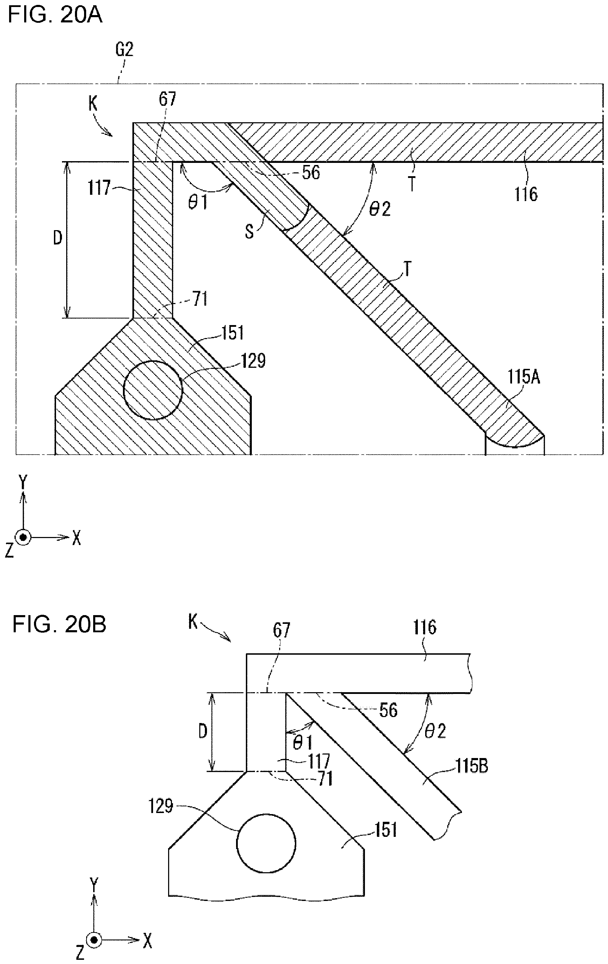

FIG. 14 illustrates the state immediately after the processing in step S7 is complete similarly to FIG. 13. In FIGs. 14 and 20, areas S and T are hatched differently. The fluid contains more separating target particles P100 in the area S than in the area T. In FIG. 14, the flow path 117 is connected to the measurement flow path 151 at a position 71. In the illustrated example, the position 71 is spaced from the entry hole 129.

The fluid to be drawn into the mixing flow path 115 in the processing in step S6 is mostly the fluid located in the measurement flow path 151 immediately after the processing in step S5. Through the processing in step S7, the fluid drawn into the mixing flow path 115 is mostly pushed back into the measurement flow path 151 through the flow path 117.

However, the fluid drawn into the mixing flow path 115 is partially pushed back also into the flow path 116 through the flow path 117. The area S is located in the mixing flow path 115 beyond a boundary 57 between the mixing flow path 115 and the flow path 117, and is also located in the flow path 116 beyond a boundary 67 between the flow path 116 and the flow path 117. This occurs when the mixing flow path 115 is orthogonally connected to the flow path 117. The fluid moving from the mixing flow path 115 to the flow path 117 branches at the boundary 57 in both the Y direction and the -Y direction.

In the state illustrated in FIG. 14, the fluid at and near the boundary 67 cannot easily move into the measurement flow path 151 when an increased amount of fluid is pushed from the mixing flow path 115 toward the flow path 117 in step S7. With the area S located at and near the boundary 67 and containing a substantial amount of separating target particles P100, the separating target particles P100 at and near the boundary 67 cannot be fully used for the predetermined process in the measurement flow path 151. Such a situation may reduce the accuracy of the predetermined process, such as detecting fewer separating target particles P100 than actually included separating target particles P100.

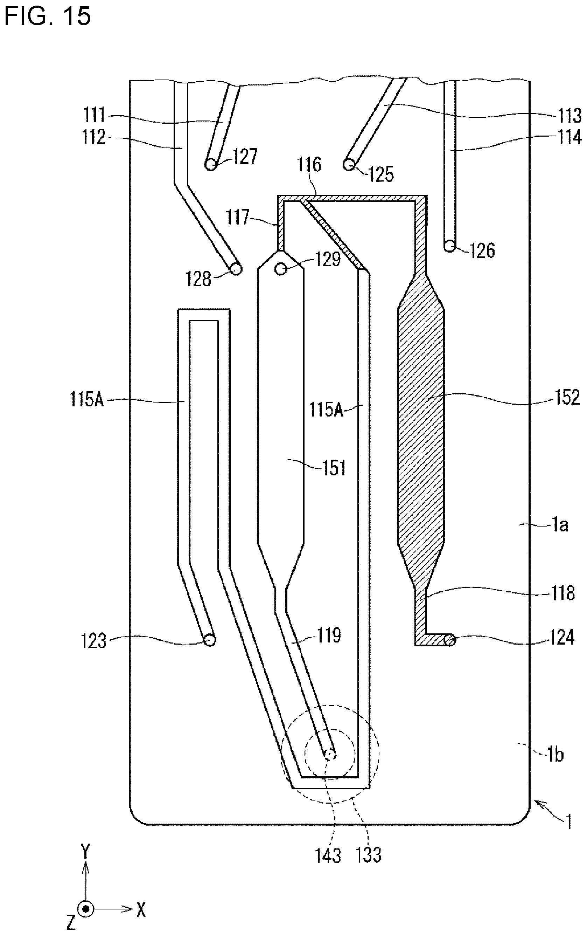

A processing device 1 described with reference to FIGs. 15 to 20A includes a mixing flow path 115A instead of the mixing flow path 115 in the processing device 1 described with reference to FIG. 14 and figures preceding FIG. 14. The mixing flow path 115A is a groove that is not open in the surface 1a or 1b. The mixing flow path 115 is connected to the flow path 117, whereas the mixing flow path 115A is connected to the flow path 116.

The mixing flow path 115A differs from the mixing flow path 115 substantially in the connection to the flow paths 116 and 117 and in the positional relationship with the flow paths 116 and 117. The processing device 1 including the mixing flow path 115Acan also be included in the flow path device 100 together with the connection device 2 and the separating device 3.

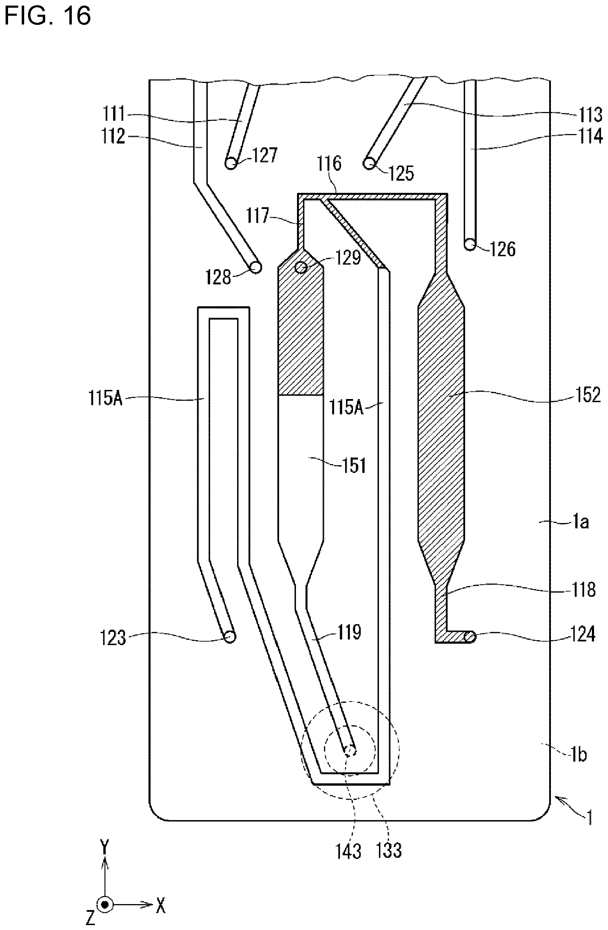

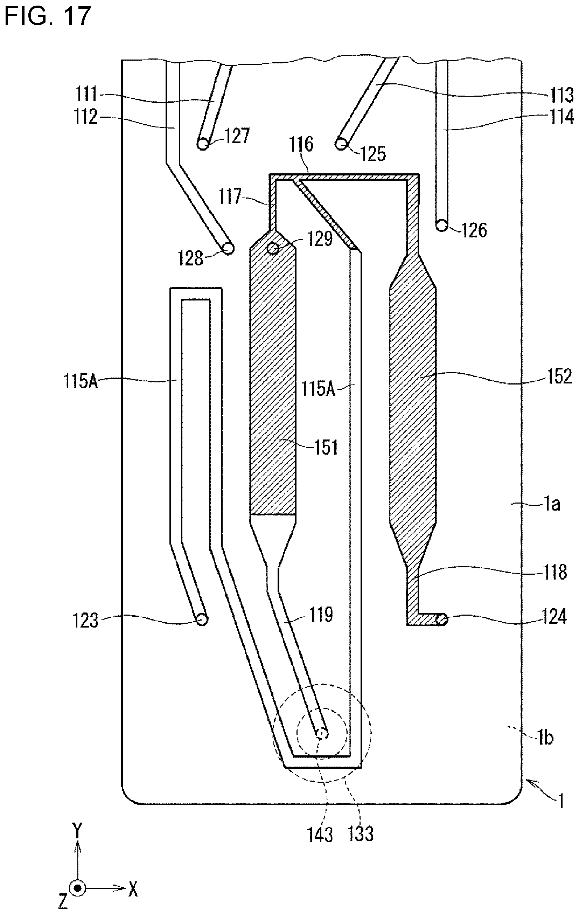

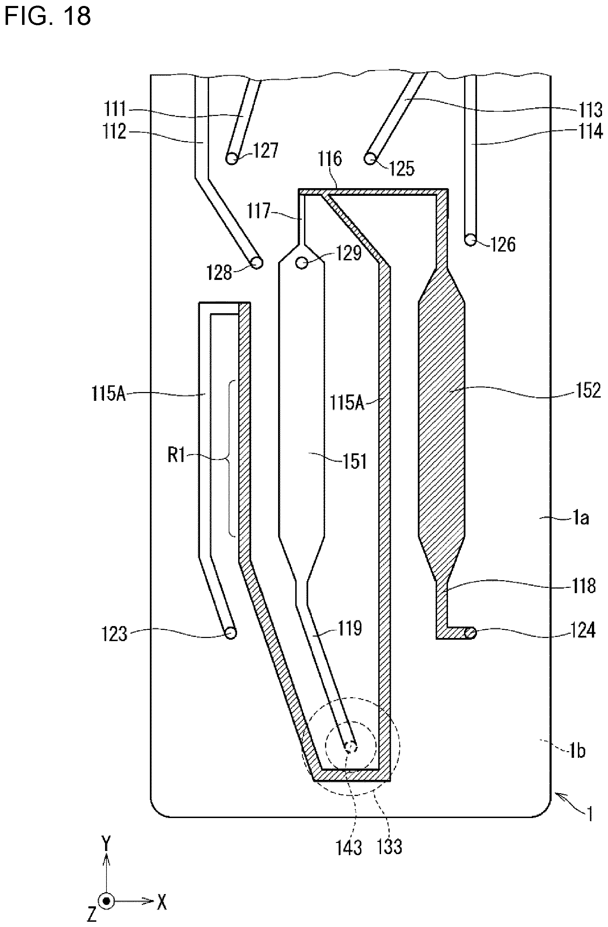

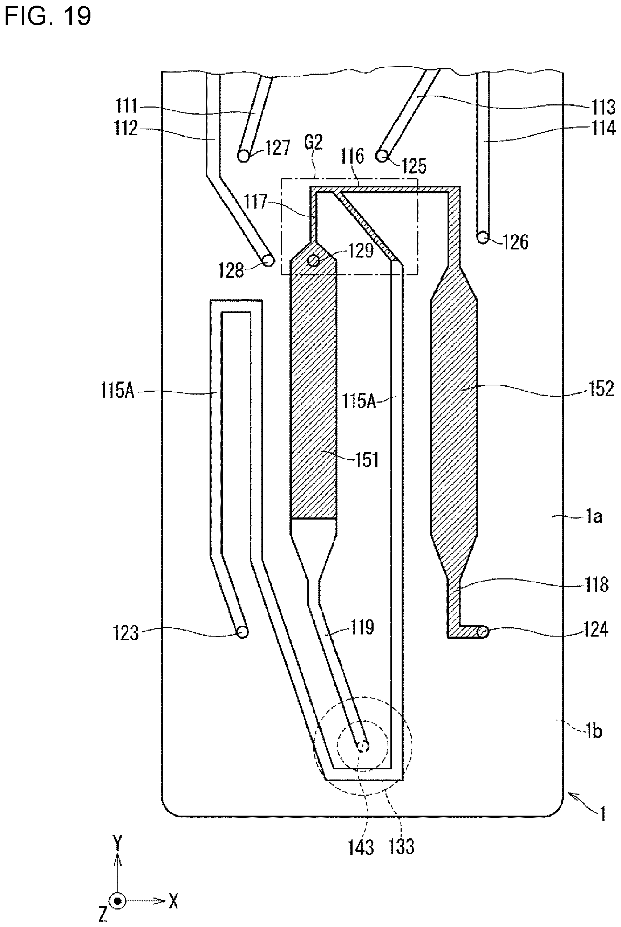

FIG. 15 illustrates the state after the processing in step S2 is complete similarly to FIG. 9. FIG. 16 illustrates the state after the processing in step S4 is complete similarly to FIG. 10. FIG. 17 illustrates the state after the processing in step S5 is complete similarly to FIG. 11. FIG. 18 illustrates the state after the processing in step S6 is complete similarly to FIG. 12. FIG. 19 illustrates the state after the processing in step S7 is complete similarly to FIG. 13.

FIG. 20A illustrates the mixing flow path 115 connected to the flow path 116 at a position 56, and illustrates the boundary 67 between the flow path 116 and the flow path 117 as viewed in plan (as viewed in the -Z direction in this example).

As viewed in plan (as viewed in the -Z direction in this example), the flow path 116 and the mixing flow path 115A define a minor angle θ1 (also referred to as a first minor angle) adjacent to the entry hole 129, and define a minor angle θ2 (also referred to as a second minor angle) opposite to the entry hole 129. The minor angle θ1 is larger than the minor angle θ2. For the mixing flow path 115 as illustrated in FIG. 14, θ1 = θ2.

The minor angle θ1 is larger than the minor angle θ2 to cause the sample to easily move toward the measurement flow path 151 through the flow path 117 after being pushed from the mixing flow path 115A into the flow path 116. A flow path with a smaller degree of bending allows easier flow of a fluid. As illustrated in FIG. 20A, the fluid in the area S less easily flows beyond the position 56 toward the reference flow path 152 (in the X direction in the area G2).

The fluid in the area S less easily flows beyond the position 56 toward the reference flow path 152 to allow more separating target particles P100 to move into the measurement flow path 151 after repeated processing in steps S6 and S7. The mixing flow path 115A may increase the accuracy of the predetermined process on the separating target particles P100 than the mixing flow path 115.

In the above example, the flow path 116 and the flow path 117 are connected with the boundary 67 in between. The flow paths 116 and 117 define a corner K. The corner K does not compromise the efficiency of the mixing flow path 115A as compared with the mixing flow path 115.

The corner K allows the measurement flow path 151 and the reference flow path 152 to be arranged in the X direction. The measurement flow path 151 and the reference flow path 152 arranged in the X direction allow optical measurement with an optical measurement device moved in a simple manner.

The flow paths 116 and 117 are grooves as described above and may be referred to as a single groove. The measurement flow path 151 and the mixing flow path 115A are also grooves. The flow paths 116 and 117, the measurement flow path 151, and the mixing flow path 115A can be described as below.

The measurement flow path 151 is a first groove connected to and continuous with the entry hole 129 (the first hole) without being open in the surface 1a or 1b.

The flow paths 116 and 117 together form a second groove connected to and continuous with the measurement flow path 151 (the first groove) without being open in the surface 1a or 1b.

The mixing flow path 115A is a third groove connected to and continuous with the second groove (the flow paths 116 and 117) without being open in the surface 1a or 1b. The third groove is connected to the second groove at the position 56 on the second groove spaced from the measurement flow path 151 (the first groove).

The first groove (the measurement flow path 151) extends toward a position opposite to the second groove (the flow paths 116 and 117) with respect to the first hole (129) (in the -Y direction in this example).

As viewed in plan, the second groove and the third groove define the minor angle θ1 (the first minor angle) adjacent to the first hole and define the minor angle θ2 (the second minor angle) opposite to the first hole, and the minor angle θ1 is larger than the minor angle θ2.

In the example of FIG. 20A, the second groove extends from the reference flow path 152 in the Y direction, in the -X direction, and then in the -Y direction at the corner K, and is connected to the measurement flow path 151 at the position 71.

In the example of FIG. 20A, the mixing flow path 115A is connected to the second groove at the position 56 at which the flow path 116 extends straight. In this case, the minor angle θ1 is obtuse.

The structures in FIG. 14 and FIG. 20A are compared. The flow path 117 extends parallel to the Y direction similarly to the measurement flow path 151. The mixing flow path 115 extends parallel to the X direction and is connected to the flow path 117. The mixing flow path 115A is connected to the flow path 116 extending in the X direction. The mixing flow path 115A is connected differently from the mixing flow path 115, thus shortening the flow path 117. More specifically, a distance D between the boundary 67 and the position 71 is shorter with the mixing flow path 115A than with the mixing flow path 115.

### 4. Variations

FIG. 20B illustrates a processing device 1 including a mixing flow path 115B instead of the mixing flow path 115A. A fluid is not illustrated. The mixing flow path 115B is a groove that is not open in the surface 1a or 1b. The mixing flow path 115B can also be referred to as the above third groove.

The mixing flow path 115B is also connected to the flow path 116 at the position 56. The boundary 67 has the end in the X direction at the same position as the end of the mixing flow path 115B in the -X direction at the position 56. This structure can also define the minor angle θ1 with the second groove being the flow paths 116 and 117. The minor angle θ1 is defined by the flow path 117 and the mixing flow path 115B. In this variation as well, the minor angle θ1 may be larger than the minor angle θ2 to increase the accuracy of the predetermined process on the separating target particles P100.

The material for the processing device 1 may be an acrylic resin (e.g., polymethyl methacrylate), polycarbonate, or a COP.

The processing device 1 may be a stack of multiple members such as plates. The processing device 1 may be a stack of, for example, a first member and a second member. In this case, the first member may include a bonding surface including grooves corresponding to the mixing flow path 115, the flow paths 111, 112, 113, 114, 116, 117, 118, and 119, the measurement flow path 151, and the reference flow path 152. The second member may include a flat surface. The bonding surface of the first member excluding a portion with the grooves may be bonded to the surface of the second member.

The first member may include recesses and protrusions around the grooves on its bonding surface. The second member may include protrusions and recesses on its surface to be fitted to the recesses and protrusions on the first member.

The components described in the above embodiments and variations may be entirely or partially combined as appropriate unless any contradiction arises.

### REFERENCE SIGNS

1 processing device
2 connection device
1a, 1b, 2a, 2b, and 3b surface
3 separating device
39 flow path
100 flow path device
115A and 115B mixing flow path
116 and 117 flow path
151 measurement flow path
129 entry hole
229 through-hole
329 exit hole
θ1 and θ2 minor angle

## Claims

1. A flow path device comprising:
a first device including
a first surface including a first hole open in a first direction,
a second surface opposite to the first surface in the first direction,
a first groove connected to and continuous with the first hole without being open in the first surface or the second surface,
a second groove connected to and continuous with the first groove without being open in the first surface or the second surface, and
a third groove connected to and continuous with the second groove without being open in the first surface or the second surface, the third groove being connected to the second groove at a position on the second groove spaced from the first groove,
wherein the first groove extends toward a position opposite to the second groove with respect to the first hole, and
as viewed in a direction parallel to the first direction, the second groove and the third groove define a first minor angle adjacent to the first hole and define a second minor angle opposite to the first hole, and the first minor angle is larger than the second minor angle.

2. The flow path device according to claim 1, wherein
the third groove is connected to the second groove at a position at which the second groove extends straight, and
the first minor angle is obtuse.

3. The flow path device according to claim 1 or claim 2, wherein
at least the first groove is light-transmissive.

4. The flow path device according to any one of claims 1 to 3, further comprising:
a second device including
a third surface,
a fourth surface opposite to the third surface and in contact with the first device, and
a second hole extending through and between the third surface and the fourth surface
and being continuous with the first groove.

5. The flow path device according to claim 4, further comprising:
a third device including
a fifth surface in contact with the third surface,
a third hole open in the fifth surface and continuous with the second hole, and
a flow path continuous with the third hole and open in the fifth surface.
